# EUROPÄISCHE PATENTSCHRIFT

(11) **EP 1 331 473 B1**
(45) Veröffentlichungstag und Bekanntmachung des Hinweises auf die Patenterteilung: **06.04.2005**
(21) Anmeldenummer: 02001519.4
(22) Anmeldetag: 22.01.2002
(51) Int. Cl.: G01N 1/30, G01N 1/31, B01L 7/00

(54) **Verfahren und Vorrichtung für die Probenvorbereitung zur Analyse von biologischen Proben**
Method and apparatus for sample preparation for analyzing biological samples
Méthode et appareil pour la préparation d'échantillons pour analyser des échantillons biologiques

(43) Veröffentlichungstag der Anmeldung: 30.07.2003
(73) Patentinhaber: MPB MelTec Patent- und Beteiligungsgesellschaft mbH, 39120 Magdeburg (DE)
(72) Erfinder: Schubert, Walter, Dr., 39175 Biederitz (DE)
(74) Vertreter: Hofstetter, Alfons J., Dr.rer.nat.

(56) Entgegenhaltungen:
- WO-A-93/19207
- US-A- 5 451 500
- US-B1- 6 300 124

## Beschreibung

Die Erfindung betrifft ein Verfahren für die Probenvorbereitung zur Analyse von biologischen Proben und eine Vorrichtung zur Durchführung des Verfahrens für die Probenvorbereitung zur Analyse von biologischen Proben.

Die qualitative und quantitative Analyse von Proteinen in einer gegebenen Zell- oder Gewebeprobe gewinnt in der Forschung und Industrie seit der Komplettsequenzierung des Genoms des Menschen und anderer Spezies zunehmend an Bedeutung. Im Hinblick auf die protein-chemischen Analysemethoden stehen moderne, sogenannte Large-Scale-Proteomics-Verfahren im Vordergrund. Diese Verfahren beruhen auf einer Aufschlüsselung einer gegebenen Zell- oder Gewebeprobe, einer Extraktion und Denaturierung der Proteine mit Hilfe verschiedener möglicher Reagenzien und der Trennung der einzelnen Proteine mit Hilfe von zum Beispiel zweidimensionalen Gel-Elektrophorese-Verfahren. Jedes einzelne Protein, das in dem Ausgangs-Proteingemisch in ausreichender Menge, Größe und mit hinreichender Wanderungsfähigkeit vorliegt, wird innerhalb solcher Gele als Fleck an einem charakteristischen Ort bezüglich der Größe und der Nettoladung nachgewiesen. In der Praxis der sogenannten Proteomforschung lassen sich auf diese Weise bis zu mehrere tausend Proteine aus einer Probe trennen. Anhand des Vergleichs verschiedener Zustände eines Gewebes können theoretisch Unterschiede der Proteinexpression durch eine ortsgenaue Überlagerung der einzelnen Gele mit Hilfe geeigneter Software ermittelt werden. Insbesondere sollten dabei neu exprimierte Proteine und die nicht mehr exprimierten oder überexprimierten Proteine anhand des Ortsvergleichs identifizierbar sein. In der täglichen Analysepraxis ergeben sich aber hinsichtlich dieser Zielsetzung einige bedeutende Limitierungen. So weisen die bekannten Analyseverfahren begrenzte Reproduzierbarkeiten auf, da es zu erheblichen Ungenauigkeiten bei den einzelnen Analyseschritten aufgrund fehlender Automatisierung kommt. So ergeben sich zum Beispiel hinsichtlich der Position einzelner Proteine Abweichungen bis zu einigen Prozent. Hinsichtlich der relativen Menge der Proteine ergeben sich Abweichungen von bis zu zwanzig Prozent.

Neben einer schwierigen technischen Durchführung der bekannten Verfahren ist auch deren Dynamik nicht ausreichend, das heißt sehr selten vorkommende Proteine können nicht gleichzeitig neben sehr häufig vorkommenden dargestellt werden. Diese Limitierungen machen es unmöglich, mit Hilfe einer geeigneten Software, die auf reproduzierbare Positionen der einzelnen Proteine angewiesen ist, eine größere Zahl, von zum Beispiel Gelen, automatisiert zu vergleichen. Die leicht voneinander abweichenden Positionen einzelner Protein-Flecken erhöht die Unsicherheit von Vergleichsanalysen. In der Proteomforschung ist man aber auf den Vergleich sehr großer Zell-Gewebemengen angewiesen, so dass die genannten Beschränkungen der bekannten Verfahren nicht tolerierbar sind.

Aus der WO 93 19207 A und der US-B1-6 300 124 sind Vorrichtungen zur Durchführung eines Verfahrens für die Probenvorbereitung zur Analyse von biologischen Proben bekannt. Die Vorrichtrungen weisen mindestens eine Kammer zur Aufnahme der auf mindestens einem Träger aufgebrachten biologischen Probe bzw. Proben sowie mindestens eine Temperaturregelvorrichtung zur Regelung und Steuerung der Temperatur innerhalb der Kammer auf. Aus der US-A-5 451 500 ist eine Vorrichtung zum automatischen Auffinden und zur Analyse von Nukleinsäuren in biologischen Proben offenbart, wobei die Vorrichtung eine Reaktionskammer zur Aufnahme der Probe, Zu- und Ableitungen für Analyseflüssigkeiten sowie eine Vorrichtung zur Steuerung des Luftstroms und der Temperatur in der Reaktionskammer aufweist.

Ein wesentlicher Grund für die Variabilität bzw. die Ungenauigkeiten und begrenzten Reproduzierbarkeiten der bekannten Analyseverfahren besteht insbesondere auch in der nicht standardisierten Probenvorbereitung.

Aufgabe der Erfindung ist es daher ein Verfahren für die Probenvorbereitung zur Analyse von biologischen Proben weiterzubilden und bereitzustellen, das eine homogene und standardisierte und gegebenenfalls vollständig automatisierte Probenvorbereitung gewährleistet. Es ist weiterhin Aufgabe der vorliegenden Erfindung eine entsprechende Vorrichtung zur Durchführung des neuen Verfahrens für die Probenvorbereitung zur Analyse von biologischen Proben bereitzustellen, wobei die Größe der einzelnen Kammern zur Aufnahme der Proben variierbar sein soll.

Diese Aufgaben werden gelöst durch ein Verfahren gemäß den Merkmalen des Anspruchs 1 und eine Vorrichtung gemäß den Merkmalen des Anspruchs 11. Vorteilhafte Ausgestaltungen sind in den abhängigen Ansprüchen definiert.

Bei einem erfindungsgemäßen Verfahren für die Probenvorbereitung zur Analyse von biologischen Proben werden folgenden Schritte ausgeführt: a) Aufbringen der biologischen Probe auf einen zweidimensionalen Träger; b) Aufbringen einer Protein fällenden oder denaturierenden ersten Lösung L1 auf die biologische Probe bzw. den Träger bei einer ersten Temperatur T1 für ein vorbestimmtes erstes Zeitintervall Z1; c1) Belassen der Protein fällenden oder denaturierenden ersten Lösung L1 auf der biologischen Probe bzw. dem Träger bei einer zweiten Temperatur T2 für ein vorbestimmtes zweites Zeitintervall Z2, wobei T2 niedriger ist als T1 und Z2 länger, gleich oder kürzer ist als Z1; oder c2) nochmaliges Aufbringen der Protein fällenden oder denaturierenden ersten Lösung L1 oder Aufbringen einer Protein fällenden oder denaturierenden zweiten Lösung L2 auf die biologische Probe bzw. den Träger bei einer zweiten Temperatur T2 für ein vorbestimmtes zweites Zeitintervall Z2, wobei T2 niedriger ist als T1 und Z2 länger, gleich oder kürzer ist als Z1; und d) Trocknen der Probe. Durch das erfindungsgemäße Probenvorbereitungsverfahren ist gewährleistet, dass eine homogene, hochstandardisierte Probenvorbereitung durchgeführt wird und entsprechend homogene Proben geschaffen werden. Infolgedessen ist es möglich, dass mittels entsprechender Computerprogramme die zu analysierenden und zu untersuchenden Proteine signifikant besser erkannt und quantifiziert werden können. Messungen haben gezeigt, dass die Irrtumswahrscheinlichkeit der Proteinerkennung um den Faktor 3 bis 4 sinkt. Zudem steigt die Anzahl der automatisch erkannten Proteine um mindestens 16 %. Schließlich erlaubt das neue Probenvorbereitungsverfahren eine vollständige Automatisierung der Probengewinnung und damit die Möglichkeit, quantitative Ergebnisse zwischen verschiedenen Labors zu vergleichen.

In einer vorteilhaften Ausgestaltung des erfindungsgemäßen Verfahrens erfolgt zwischen den Verfahrensschritten a) und b) als Verfahrensschritt a1) und/oder zwischen den Verfahrensschritten b) und a) als Verfahrensschritt b1) ein Trocknen der Probe. Es hat sich gezeigt, dass hierdurch eine weitere Homogenisierung und auch Konzentrierung der zu untersuchenden biologischen Probe erfolgt. Dabei kann das Trocknen gemäß den Verfahrensschritten a1), b1) oder d) mittels einer Luft- oder Vakuumtrocknung erfolgen.

In einer weiteren vorteilhaften Ausgestaltung des erfindungsgemäßen Verfahrens erfolgt nach den Verfahrensschritten a) oder a1) als Verfahrensschritt b2) ein Einfrieren der Probe. Auch hierdurch läßt sich vorteilhafterweise eine homogenere Proteinkonzentration und eine stabilere Proteinfällung erzielen. Die biologische Probe kann dabei eine Zell- oder Gewebeprobe oder ein Gemisch von Proteinen oder Nukleinsäuren oder ein Gemisch von Makromolekülen bestehend aus Proteinen und/oder Kohlehydraten und/oder Fetten und/oder Nukleinsäuren sein.

In einer weiteren vorteilhaften Ausgestaltung des erfindungsgemäßen Verfahrens sind die Lösungen L1 und/oder L2 organische Lösungsmittel und/oder Lösungen mit kritischen pH-Werten und/oder Lösungen mit kritischen lonenkonzentrationen und/oder Salzlösungen und/oder Metallionen enthaltende Lösungen. Besonders vorteilhaft haben sich für die Durchführung des erfindungsgemäßen Probevorbereitungsverfahrens die organischen Lösungsmittel Methanol, Äthanol, Butanol und Aceton erwiesen. Als Salzlösungen finden insbesondere gelöste Salze der Pikrinsäure, der Gallusgerbsäure, der Wolframsäure, der Molybdänsäure, der Trichloressigsäure, der Perchlorsäure und der Sulfosalicylsäure Verwendung. Als vorteilhafter Temperaturbereich T1 hat sich ein Bereich zwischen -10°C und 60°C erwiesen.

In einer weiteren vorteilhaften Ausgestaltung des erfindungsgemäßen Verfahrens werden die biologischen Proben nach dem Verfahrensschritt d) einem Proteinund/oder Nukleinsäurebestimmungsverfahren und/oder einem proteinchemischen Trennverfahren und/der einem Verfahren zur in Situ Analyse von Zellstrukturen zugeführt.

Eine erfindungsgemäße Vorrichtung zur Durchführung des beschriebenen Verfahrens für die Probenvorbereitung zur Analyse von biologischen Proben weist mindestens eine Kammer zur Aufnahme der auf mindestens einem Träger aufgebrachten biologischen Probe bzw. Proben und mindestens eine Temperaturregelvorrichtung zur Regelung und Steuerung der Temperatur innerhalb der Kammer auf. Des weiteren ist innerhalb der Kammer mindestens eine Trennwand angeordnet, wobei die Trennwand manuell oder automatisch entfernt oder verschoben werden kann Dadurch ist vorteilhafterweise gewährleistet, dass die aufzubereitende biologische Probe unterschiedlichen Temperaturbereichen innerhalb der Kammer ausgesetzt wird. Zudem ist die Größe der einzelnen Kammer variierbar. Es ist auch möglich, dass mehrere Kammern in Reihe und hintereinander oder übereinander angeordnet sind. Durch die Ausbildung von mehreren Kammern ist es vorteilhafterweise möglich, jeder Kammer einen entsprechenden Temperaturbereich oder anderen Reaktionsbereich zuzuweisen. Dadurch erhöht sich der Probendurchsatz, da z. B. ein Abkühlen oder ein Aufheizen einer einzelnen Kammer zur Erlangung unterschiedlicher Temperaturbereiche nicht notwendig ist.

In einer weiteren vorteilhaften Ausgestaltung der erfindungsgemäßen Vorrichtung sind mehrere Träger auf einem oder mehreren Probeschlitten angeordnet. Auch dies führt zu einer signifikanten Erhöhung des Probendurchsatzes. Dabei können die einzelnen Verfahrensschritte durch die erfindungsgemäße Vorrichtung manuell, halbautomatisch oder automatisch ausgeführt und gesteuert werden.

Weitere Einzelheiten, Merkmale und Vorteile der Erfindung ergeben sich aus den in den folgenden Figuren dargestellten und beschriebenen Ausführungsbeispielen:

Es zeigen
- Figur 1: eine schematische Darstellung einer Vorrichtung zur Durchführung der erfindungsgemäßen Probenvorbereitung zur Analyse von biologischen Proben gemäß einer ersten Ausführungsform;
- Figur 2: eine schematische Darstellung der Vorrichtung gemäß Figur 1 und einem in einer ersten Kammer eingefahrenen Probeschlitten, und
- Figur 3: eine schematische Darstellung der Vorrichtung gemäß Figur 1 mit dem Probeschlitten innerhalb einer zweiten Kammer;
- Figur 4: eine schematische Darstellung einer Vorrichtung zur Durchführung des erfindungsgemäßen Probenvorbereitungsverfahrens zur Analyse von biologischen Proben gemäß einer zweiten Ausführungsform; und
- Figur 5: eine schematische Darstellung der Funktionsweise der Vorrichtung gemäß Figur 4.

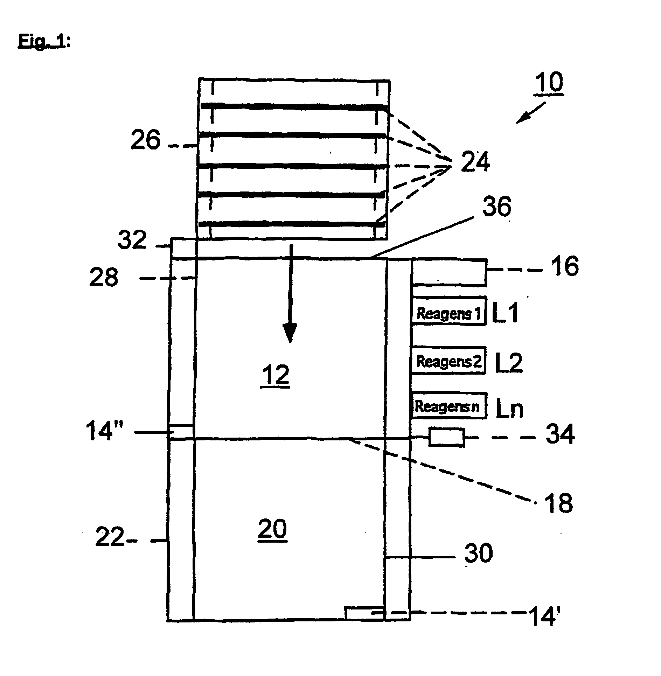

Figur 1 zeigt in einer schematischen Darstellung eine Vorrichtung 10 zur Durchführung eines Verfahrens für die Probenvorbereitung zur Analyse von biologischen Proben mit einer ersten Kammer 12 und einer zweiten Kammer 20, die sich innerhalb eines Gehäuses 22 befinden. In die erste Kammer 12 und in die zweite Kammer 20 ist ein Probeschlitten 26 mit einer Vielzahl von Trägern 24, auf die biologische Proben aufgebracht sind, über die Schienen 28, 30 ein- und ausfahrbar. Die Bewegung des Probeschlittens 26 erfolgt dabei über den ersten Motor 32.

Desweiteren erkennt man, dass das Gehäuse 22, bzw. die erste Kammer 12 mittels eines Deckels 36 verschließbar ist. Die erste Kammer 12 ist zudem mit einer Vakuumpumpe 16 sowie mehreren Anschlüssen zum Einbringen unterschiedlicher Protein fällender oder denaturierender Lösungen L1, L2, Ln ausgestaltet. Die Anschlüsse sind dabei derart ausgebildet, dass ein Ein- und ein Ausbringen der Lösungen aus den Kammern 12, 20 erfolgen kann. Desweiteren erkennt man, dass die erste Kammer 12 von der zweiten Kammer 20 mittels einer bewegbaren Trennwand 18 getrennt ist. Die Bewegung der Trennwand 18 wird über einen zweiten Motor 34 gesteuert. Zur Regelung der Temperatur innerhalb der Kammern 12, 20 ist im Bereich der zweiten Kammer 20 eine Temperaturregelvorrichtung 14' angeordnet. Optional kann eine entsprechende Temperaturregelvorrichtung 14" auch noch in der ersten Kammer 12 angeordnet sein. Die Temperatur innerhalb der Kammern 12, 20 kann dabei innerhalb eines Temperaturbereichs zwischen -10°C und 60°C eingestellt werden. Neben der bereits erwähnten automatischen bzw. motorischen Entfernung der Trennwand 18 kann dies natürlich auch manuell durchgeführt werden.

Es ist aber auch möglich, dass an Stelle der beiden Kammern 12, 20 lediglich eine einzelne Kammer vorgesehen ist (nicht dargestellt).

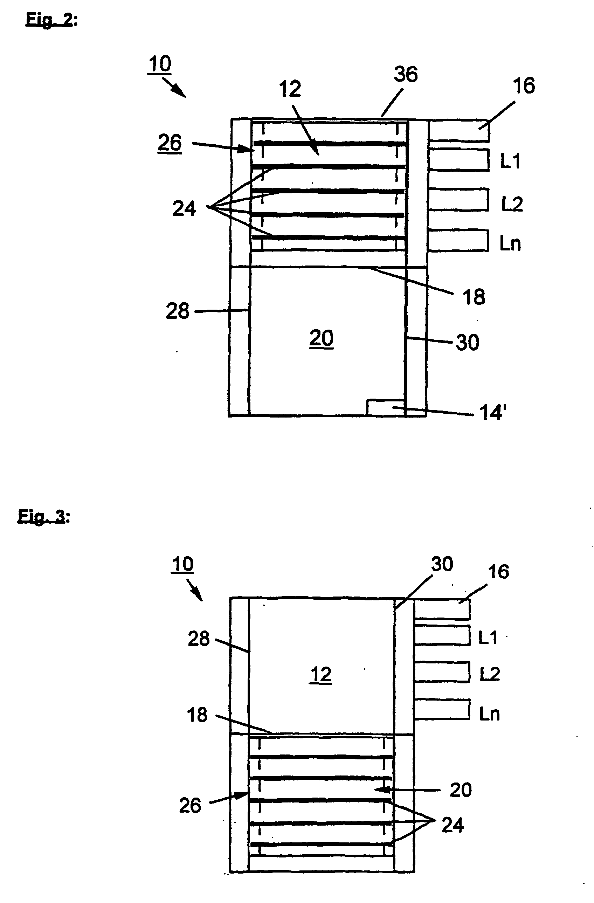

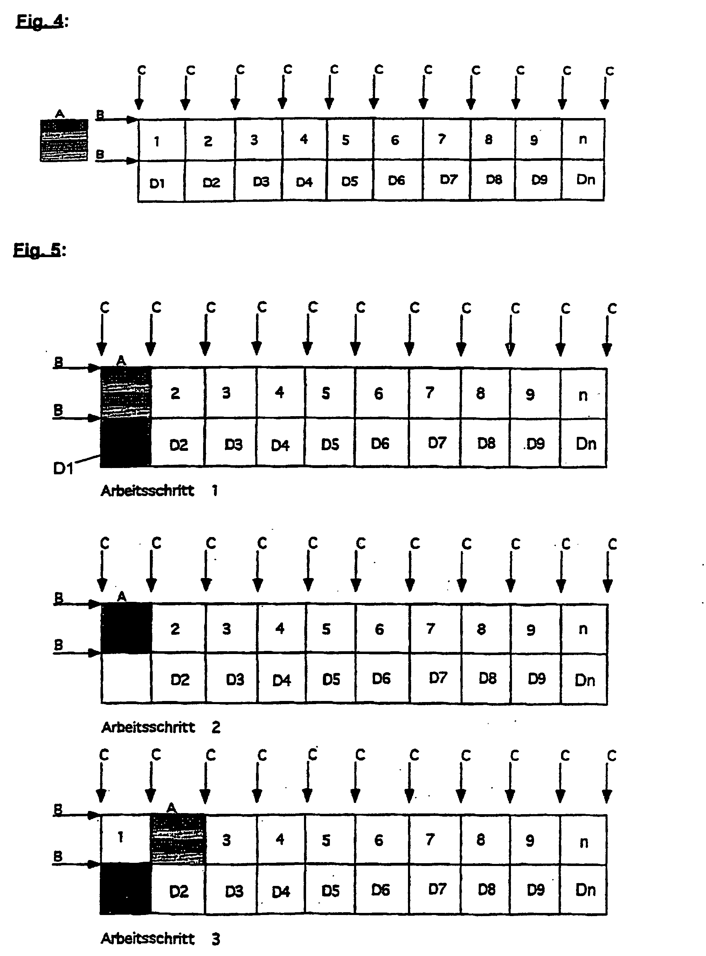

Im Folgenden wird die Funktionsweise des hier beschriebenen ersten Ausführungsbeispieles anhand der Figuren 1 bis 3 näher erläutert.

Im Falle der vollautomatischen Steuerung der Vorrichtung 10 bewegt der erste Motor 32 die Schlittenbox 26 in programmierten Zeitintervallen Z1, Z2 von der ersten Kammer 12 in die zweite Kammer 20 und von der zweiten Kammer 20 zurück in die erste Kammer 12. Dieser Vorgang ist dabei beliebig oft wiederholbar. Durch Aktivierung der Vakuumpumpe 16 kann bei je nach Stellung der Trennwand 18 entweder in der Kammer 12 oder in beiden Kammern 12, 20 ein Vakuum erzeugt werden. Die Erzeugung des Vakuums dient dabei zur Trocknung der Proben auf den Trägern 24 bzw. in dem Probeschlitten 26. Entsprechendes gilt für die Zufuhr und Absaugen der Lösungen L1, L2, Ln. Auch hier kann in Abhängigkeit von der Stellung der Trennwand 18 entweder nur die erste Kammer 12 oder beide Kammern 12, 20 mit den entsprechenden Lösungen L1, L2, Ln gefüllt und entleert werden.

In einem ersten Verfahrensschritt a) werden die biologischen Proben auf einem zweidimensionalen Träger 24 aufgebracht. Bei den biologischen Proben handelt es sich üblicherweise um eine Zell- oder Gewebeprobe oder ein Gemisch von Proteinen oder Nukleinsäuren oder ein Gemisch von Markomolekülen bestehend aus Proteinen und/oder Kohlehydraten und/oder Fetten und/oder Nukleinsäuren. So können beispielhaft Zellen aus einer Zellkultur in einem Puffer aufgenommen werden. Dabei wird zum Beispiel die Zelldichte auf 3x10⁸ Zellen eingestellt. Es kann aber auch ein Kryostat-Gewebeschnitt als Probe verwendet werden. Die Wahl der Anzahl der Zellen oder die Anzahl der Gewebeschnitte hängt von der Zielsetzung ab, das heißt welchem weiteren Verfahren die biologischen Proben nach Beendigung der Probenvorbereitung zugeführt werden. Es kann sich dabei üblicherweise um ein Protein- und/oder Nukleinsäurebestimmungsverfahren und/oder ein protein-chemisches Trennverfahren und/oder einem Verfahren zur in Situ Analyse von Zellstrukturen handeln. Die im Puffer gelösten Zellen werden mit Hilfe einer Pipette gleichmäßig auf den Träger 24 aufgetragen. Alternativ werden ein oder mehrere Gewebeschnitte auf den Träger 24 aufgenommen. Je nach Größe des Probeschlittens 26 können so eine Vielzahl von Trägern 24 aufgenommen werden. Vor dem Einfahren des Probeschlittens 26 in die Vorrichtung 10 wird die Trennwand 18 durch Zug nach außen verschoben, so dass die zweite Kammer 20 von der über ihr angeordneten ersten Kammer 12 aus zugänglich wird. Die zweite Kammer 20 wird dann mit der ersten Protein fällenden oder denaturierenden Lösung L1 bis knapp an den oberen Kammerrand gefüllt. Bei dem hier beschriebenen Ausführungsbeispiel besteht die erste Lösung L1 aus einem organischen Lösungsmittel, zum Beispiel Methanol, Äthanol, Butanol oder Aceton. Es ist aber auch möglich, dass die Lösungen L1 und L2 nicht nur aus organischen Lösungsmitteln, sondern auch aus Lösungen mit kritischen pH-Werten und/oder Lösungen mit kritischen lonenkonzentrationen und/oder Salzlösungen und/oder Metallionen enthaltende Lösungen bestehen. Die Salzlösungen können dabei gelöste Salze der Pikrinsäure, der Gallusgerbsäure, der Wolframsäure, der Molybdänsäure, der Trichloressigsäure, der Perchlorsäure oder der Sulfosalicylsäure enthalten.

In einem nächsten Arbeitsschritt wird die Trennwand 18 wieder in ihre Ausgangsposition zurückgeschoben, das heißt in eine Abschlußposition zur Trennung der ersten Kammer 12 von der zweiten Kammer 20. Nunmehr wird die Schlittenbox 26 in die Schienen 28, 30 der Vorrichtung 10 eingesetzt und in die erste Kammer 12 eingefahren. Desweiteren wird der Deckel 36 der Vorrichtung 10 verschlossen. Nunmehr wird in einem weiteren Arbeitsschritt mit Hilfe der Vakuumpumpe 16 ein Vakuum in der ersten Kammer 12 erzeugt. Dadurch werden die biologischen Proben gemäß einem Verfahrensschritt a1) ein erstes Mal getrocknet. Nach Beendigung dieses Trocknungsvorganges a1) wird das Vakuum aus der ersten Kammer 12 entfernt. Schließlich wird die Trennwand 18 zwischen der ersten Kammer 12 und der zweiten Kammer 20 wiederum entfernt und die Schlittenbox 26 in die mit der ersten Lösung L1 gefüllte zweite Kammer 20 abgesenkt. Dadurch erfolgt ein Aufbringen der Protein fällenden oder denaturierenden ersten Lösung L1 auf die biologischen Proben bzw. die Träger 24 bei einer ersten Temperatur T1, die im vorliegenden Fall Raumtemperatur darstellt. Durch den Kontakt mit dem organischen Lösungsmittel L1 wird den Proteinen der Proben Wasser aus dem Hydratationsmantel entzogen. Nach einem vorbestimmten Zeitintervall Z1, welches zum Beispiel 10 Sekunden betragen kann, wird der Schlitten 26 wieder in die Kammer 12 gezogen. Damit ist der Verfahrensschritt b) beendet. Aufgrund der sehr kurzen Einwirkungszeit kommt es nur zu einem partiellen, schonenden Wasserentzug, so dass die räumliche Struktur der Proteine in den Zellen nicht oder nur unwesentlich beeinflußt wird. Auf diese Weise werden die Proteine für die folgenden Verfahrensschritte c1) oder c2) homogen zugänglich. Vor der Durchführung der Verfahrensschritte c1) oder c2) wird die Trennwand 18 wieder eingeschoben, so dass es wieder zu einer Trennung der beiden Kammern 10, 20 kommt. Gemäß einem Verfahrensschritt b1) erfolgt nunmehr wiederum ein Trocknen der Probe mit Hilfe der Vakuumpumpe 16. Schließlich wird nach Beendigung des Trocknungsvorganges und Entfernung des Vakuums aus der ersten Kammer 12 wiederum die Trennwand 18 zwischen den Kammern 10, 20 entfernt.

Im folgenden Arbeitsschritt wird über die Temperaturregelvorrichtung 14' die Temperatur innerhalb der Kammern 10, 20 auf -20°C abgesenkt und eingestellt. Da die biologischen Proben innerhalb der Gasphase des organischen Lösungsmittels L1 in der ersten Kammer 12 angeordnet sind, werden diese gemäß einem Verfahrensschritt b2) eingefroren. Es ist auch möglich, die Proben durch die Zufuhr von flüssigem Stickstoff einzufrieren. Entsprechendes gilt für die Zufuhr von flüssigem Isopentan bei zirka -130°C. Diese Flüssigkeiten müssen anschließend wieder aus dem System entfernt werden. In der zweiten Kammer 20 liegt das organische Lösungsmittel L1 aufgrund des üblicherweise wesentlich niedrigeren Gefrierpunkts in flüssigem Zustand vor. Dies gilt insbesondere für die Verwendung von Aceton als organischem Lösungsmittel. Anschließend wird die Schlittenbox 26 mit den biologischen Proben in die zweite Kammer 20 abgesenkt, so dass es gemäß dem Verfahrensschritt c2) zu einem weiteren Aufbringen der Protein fällenden oder denaturierenden ersten Lösung L1 auf die biologische Probe bzw. den Träger bei der zweiten Temperatur T2 kommt. Die Proben verbleiben nunmehr für ein vorbestimmtes zweites Zeitintervall Z2, was in der beschriebenen Ausführungsform zirka 10 Minuten betragen kann, in der zweiten Kammer 20. Durch das zusätzliche Aufbringen der ersten Lösung L1 bei einer niedrigen Temperatur T2 erfolgt eine schonende, aufgrund des vorbereitenden Verfahrensschrittes b) homogene und komplette Extraktion des Wassersmantels der zellulären Proteine in Situ mit einer weitgehenden Erhaltung der dreidimensionalen Struktur von Proteinen und Proteinkomplexen der behandelten biologischen Probe.

Anschließend wird die Schlittenbox 26 wieder in die erste Kammer 12 eingefahren, wobei die Trennwand wieder zwischen die Kammern 12, 20 geschoben und arretriert wird. In einem abschließenden Verfahrensschritt d) werden nunmehr die fertig vorbereiteten Proben getrocknet. Dies erfolgt wiederum mit Hilfe der Vakuumpumpe 16. Es ist aber auch möglich, dass das Trocknen der Proben mittels Lufttrocknung erfolgt.

Die Ausgestaltung der Vorrichtung 10 läßt es aber auch zu, dass nicht nur eine Lösung L1 verwendet wird, sondern eine Vielzahl unterschiedlicher Lösungen L2 bis Ln sequenziell oder gleichzeitig eingefüllt und wieder abgesaugt werden.

Es ist aber auch möglich, dass bei der Vorrichtung 10 auf die Trennwand 18 verzichtet wird. In diesem Fall besteht die Vorrichtung 10 nur aus einer Kammer 12 (nicht dargestellt) und einer Temperaturregelungsvorrichtung 14'. Die obere Hälfte der Kammer 12 ist dabei für die Gasphase der einzubringenden und abzusaugenden Lösungen L1, L2 bis Ln, die untere Hälfte für die Flüssigkeitsphase dieser Lösungen vorgesehen. Der gesamte Vorgang wird manuell in vorgegebenen Zeitintervallen gesteuert. Auch auf die Vakuumpumpe und die Motoren 32, 34 kann bei dieser Version der Vorrichtung 10 verzichtet werden.

Desweiteren ist es möglich durch die Variation der Höhe der Kammern 12, 20 der in den Figuren 1 bis 3 dargestellten Vorrichtung 10 unterschiedliche Schlittenboxen 26 mit variabler Aufnahmekapazität bezüglich der Anzahl von Trägern 24 zu verwenden. Dadurch wird die Zahl parallel verarbeitbarer Proben erhöht. So können zum Beispiel pro Vorrichtung 10 zwischen zehn und fünfzig Proben gleichzeitig verarbeitet werden. Zudem ist es möglich, durch ein paralleles Betreiben der Vorrichtung 10 die Anzahl der zu bearbeitenden Proben beliebig zu steigern. Dabei kann zum Beispiel eine einzelne Vakuumpumpe 16 über entsprechende Anschlüsse mit einer Vielzahl von Vorrichtungen 10 verbunden sein.

Figur 4 zeigt in einer schematischen Darstellung eine Vorrichtung zur Durchführung eines Probenvorbereitungsverfahrens zur Analyse von biologischen Proben gemäß einem zweiten Ausführungsbeispiel. Man erkennt, dass mehrere Kammern 1, 2, 3 ...,n in Reihe und hintereinander angeordnet sind. Dabei sind die einzelnen Kammern 1, 2, 3 ...,n mit entsprechenden Deckeln D1, D2, D3 ...,Dn verschließbar.

Im Folgenden wird die hier dargestellte zweite Ausführungsform näher anhand ihrer Funktionsweise beschrieben. So wird eine Schlittenbox A mit den darin enthaltenden Proben bzw. den Proben aufweisenden Trägern in die Schienen B eingesetzt und über der Kammer 1 plaziert. Danach wird die Schlittenbox A in die Kammer 1 abgesenkt und der Kammerdeckel D1 wird mittels der Führungsschiene C über die Kammer 1 geschoben. In der Kammer 1 wird daran anschließend ein Vakuum erzeugt. Nach Beendigung des Vakuum-Trocknungsvorganges und der Luftflutung der Kammer 1 wird der Deckel D1 in seine Ausgangsposition zurückgefahren. Die Schlittenbox A kann dann aus der Kammer 1 wieder in die Schienenführung B zurückgehoben werden. Nach einem Verfahren der Schlittenbox A bis über die Kammer 2 wird diese in die Kammer 2 abgesenkt. Ein Deckel D2 verschließt wiederum die Kammer 2. In der Kammer 2 erfolgt das Aufbringen der Protein fällenden oder denaturierenden ersten Lösung L1 gemäß Verfahrensschritt b). Nach Ausbringen des Probeschlittens A aus der Kammer 2 und ein entsprechendes Einbringen des Probeschlittens A in die Kammer 3 werden die Proben in der Kammer 3 gemäß dem Verfahrensschritt b1) getrocknet. Die Kammer 4 dient zur Durchführung der Verfahrensschritte c1) oder c2) das heißt einer weiteren Aufbringung einer Protein fällenden oder denaturierenden Lösung bei einer zweiten Temperatur T2, die niedriger ist als die erste Temperatur T1, die im vorliegenden Fall in der Kammer 2 vorgeherrscht hat. Die Kammer 5 dient bei der dargestellten Vorrichtung als Vakuumkammer für die weitere Probentrocknung gemäß Verfahrensschritt d). Alle weiteren Kammern können für die weitere Probenbehandlung verwendet werden. So kann zum Beispiel in Kammer 6 ein Puffer oder eine zweite Lösung L2 auf die Proben aufgetragen werden. Entsprechendes gilt für die Kammern 7 bis 9 mit weiteren Pufferlösungen oder weiteren Protein fällenden oder denaturierenden Lösungen. Zudem können Kammern für die Asservierung der Proben nach einem Durchlauf ausgebildet sein. Desweiteren können Kammern einen sogenannten "Cell/Tissue-Sampler" enthalten, der die behandelten Proben von dem Träger in ein Reagenzglas oder ein Zentrifugenröhrchen aufnimmt.

## Patentansprüche

1. Verfahren für die Probenvorbereitung zur Analyse von biologischen Proben, folgende Schritte umfassend:
a) Aufbringen der biologischen Probe auf einen zweidimensionalen Träger;
b) Aufbringen einer Protein fällenden oder denaturierenden ersten Lösung L1 auf die biologische Probe bzw. den Träger bei einer ersten Temperatur T1 für ein vorbestimmtes erstes Zeitintervall Z1;
c1) Belassen der Protein fällenden oder denaturierenden ersten Lösung L1 auf der biologischen Probe bzw. dem Träger bei einer zweiten Temperatur T2 für ein vorbestimmtes zweites Zeitintervall Z2, wobei T2 niedriger ist als T1 und Z2 länger, gleich oder kürzer ist als Z1; oder
c2) nochmaliges Aufbringen der Protein fällenden oder denaturierenden ersten Lösung L1 oder Aufbringen einer Protein fällenden oder denaturierenden zweiten Lösung L2 auf die biologische Probe bzw. den Träger bei einer zweiten Temperatur T2 für ein vorbestimmtes zweites Zeitintervall Z2, wobei T2 niedriger ist als T1 und Z2 länger, gleich oder kürzer ist als Z1; und
d) Trocknen der Probe.

2. Verfahren nach Anspruch 1,
**dadurch gekennzeichnet,**
**dass** zwischen den Verfahrensschritten a) und b) als Verfahrensschritt a1) und/oder zwischen den Verfahrensschritten b) und c) als Verfahrensschritt b1) ein Trocknen der Probe erfolgt.

3. Verfahren nach Anspruch 2,
**dadurch gekennzeichnet**
**dass** das Trocknen der Probe mittels einer Luft- oder Vakuumtrocknung erfolgt.

4. Verfahren nach einem der vorhergehenden Ansprüche,
**dadurch gekennzeichnet,**
**dass** nach den Verfahrensschritten b) oder b1) als Verfahrensschritt b2) ein Einfrieren der Probe erfolgt.

5. Verfahren nach einem der vorhergehenden Ansprüche,
**dadurch gekennzeichnet,**
**dass** die biologische Probe eine Zell- oder Gewebeprobe oder ein Gemisch von Proteinen oder Nukleinsäuren oder ein Gemisch von Makromolekülen bestehend aus Proteinen und/oder Kohlehydraten und/oder Fetten und/oder Nukleinsäuren ist.

6. Verfahren nach einem der vorhergehenden Ansprüche,
**dadurch gekennzeichnet,**
**dass** die Lösungen L1 und/oder L2 organische Lösungsmittel und/oder Lösungen mit kritischen pH-Werten und/oder Lösungen mit kritischen lonenkonzentrationen und/oder Salzlösungen und/oder Metallionen enthaltende Lösungen sind.

7. Verfahren nach Anspruch 6,
**dadurch gekennzeichnet,**
**dass** die organischen Lösungsmittel Methanol und/oder Äthanol und/oder Butanol und/oder Aceton sind.

8. Verfahren nach Anspruch 6,
**dadurch gekennzeichnet,**
**dass** die Salzlösungen gelöste Salze der Pikrinsäure und/oder der Gallusgerbsäure und/oder der Wolframsäure und/oder der Molybdänsäure und/oder der Trichloressigsäure und/oder der Perchlorsäure und/oder der Sulfosalicylsäure enthalten.

9. Verfahren nach einem der vorhergehenden Ansprüche,
**dadurch gekennzeichnet,**
**dass** T1 einen Temperaturbereich zwischen -10°C bis 60°C umfasst.

10. Verfahren nach einem der vorhergehenden Ansprüche,
**dadurch gekennzeichnet,**
**dass** die biologischen Proben nach dem Verfahrensschritt d) einem Protein- und/oder Nukleinsäurebestimmungsverfahren und/oder einem proteinchemischen Trennverfahren und/oder einem Verfahren zur in Situ Analyse von Zellstrukturen zugeführt werden.

11. Vorrichtung zur Durchführung eines Verfahrens für die Probenvorbereitung zur Analyse von biologischen Proben nach einem der vorhergehenden Ansprüche mit mindestens einer Kammer (12, 20) zur Aufnahme der auf mindestens einem Träger (24) aufgebrachten biologischen Probe bzw. Proben und mindestens einer Temperaturregelvorrichtung (14', 14") zur Regelung und Steuerung der Temperatur innerhalb der Kammer (12, 20),
**dadurch gekennzeichnet,**
**dass** innerhalb der Kammer (12, 20) mindestens eine Trennwand (18) angeordnet ist und die Trennwand (18) manuell oder automatisch entfernt oder verschoben werden kann.

12. Vorrichtung nach Anspruch 11,
**dadurch gekennzeichnet,**
**dass** die Kammer (12) mit einem Deckel (36) verschließbar ist.

13. Vorrichtung nach Anspruch 11 oder 12,
**dadurch gekennzeichnet,**
**dass** die Vorrichtung (10) mindestens eine Vakuumpumpe (16) zur Erzeugung eines Vakuums innerhalb der Kammer (12,20) aufweist.

14. Vorrichtung nach Anspruch 11 bis 13,
**dadurch gekennzeichnet,**
**dass** mehrere Kammern (1, 2, 3 ..., n) in Reihe und hintereinander angeordnet sind.

15. Vorrichtung nach einem der Ansprüche 11 bis 13,
**dadurch gekennzeichnet,**
**dass** mehrere Kammern (12, 20) übereinander angeordnet sind.

16. Vorrichtung nach einem der Ansprüche 11 bis 15,
**dadurch gekennzeichnet,**
**dass** mehrere Träger (24) auf einem oder mehreren Probenschlitten (26) angeordnet sind.

17. Vorrichtung nach einem der Ansprüche 11 bis 16,
**dadurch gekennzeichnet,**
**dass** die einzelnen Verfahrensschritte durch die Vorrichtung (10) manuell, halbautomatisch oder automatisch ausgeführt und gesteuert werden.

## Claims

1. Method for the sample preparation for analysis of biological samples, including the steps of:
a) applying the biological sample to a two-dimensional support;
b) applying a first protein precipitating and denaturing solution L1 to the biological sample or the support, respectively, at a first temperature T1 for a predetermined first time interval Z1;
c1) leaving the first protein precipitating or denaturing solution L1 on the biological sample or the support, respectively, at a second temperature T2 for a predetermined second time interval Z2, wherein T2 is lower than T1 and Z2 is longer than, equal to or shorter than Z1; or
c2) again applying the first protein precipitating or denaturing solution L1 or applying a second protein precipitating or denaturing solution L2 to the biological sample or the support, respectively, at a second temperature T2 for a predetermined second time interval Z2, wherein T2 is lower than T1 and Z2 is longer than, equal to or shorter than Z1; and
d) drying the sample.

2. Method according to claim 1,
**characterized in that**
drying the sample is effected between the method steps a) and b) as a method step a1) and/or between the method steps b) and c) as a method step b1).

3. Method according to claim 2,
**characterized in that**
drying the sample is effected by means of air or vacuum drying.

4. Method according to any one of the preceding claims,
**characterized in that**
after the method steps b) or b1), freezing the sample is effected as a method step b2).

5. Method according to any one of the preceding claims,
**characterized in that**
the biological sample is a cell or tissue sample or a mixture of proteins or nucleic acids or a mixture of macromolecules consisting of proteins and/or carbohydrates and/or fats and/or nucleic acids.

6. Method according to any one of the preceding claims,
**characterized in that**
the solutions L1 and/or L2 are organic solvents and/or solutions with critical pH values and/or solutions with critical ionic concentrations and/or salines and/or solutions containing metal ions.

7. Method according to claim 6,
**characterized in that**
the organic solvents are methanol and/or ethanol and/or butanol and/or acetone.

8. Method according to claim 6,
**characterized in that**
the salines are dissolved salts of the picric acid and/or of the gallotannic acid and/or of the tungstic acid and/or of the molybdic acid and/or of the trichloroacetic acid and/or of the perchloric acid and/or of the sulfosalicylic acid.

9. Method according to any one of the preceding claims,
**characterized in that**
T1 includes a temperature range between -10°C and 60°C.

10. Method according to any one of the preceding claims,
**characterized in that**
after the method step d), the biological samples are supplied to a protein and/or nucleic acid determination method and/or a protein-chemical separating method and/or a method for in situ analysis of cell structures.

11. Apparatus for performing a method for the sample preparation for analysis of biological samples according to any one of the preceding claims, including at least one chamber (12, 20) for receiving the biological sample or samples applied to at least one support (24), respectively, and at least one temperature regulating device (14', 14") for regulating and controlling the temperature within the chamber (12, 20),
**characterized in that**
within the chamber (12, 20), at least one partition (18) is disposed, and the partition (18) can be manually or automatically removed or displaced.

12. Apparatus according to claim 11,
**characterized in that**
the chamber (12) is closable with a lid (36).

13. Apparatus according to claim 11 or 12,
**characterized in that**
the apparatus (10) has at least one vacuum pump (16) for generating a vacuum within the chamber (12, 20).

14. Apparatus according to claim 11 to 13,
**characterized in that**
plural chambers (1, 2, 3 ..., n) are disposed in series and one behind the other.

15. Apparatus according to any one of claims 11 to 13,
**characterized in that**
plural chambers (12, 20) are disposed one above the other.

16. Apparatus according to any one of claims 11 to 15,
**characterized in that**
plural supports (24) are disposed on one or more sample slides (26).

17. Apparatus according to any one of claims 11 to 16,
**characterized in that**
the individual method steps are manually, semi-automatically or automatically performed and controlled by the apparatus (10).

## Revendications

1. Procédé de préparation d'échantillons pour analyser des échantillons biologiques, comportant les étapes suivantes:
a) mise en place de l'échantillon biologique sur un support bidemensionnel;
b) dépôt d'une première solution L1 précipitant ou dénaturant de la protéine sur l'échantillon biologique respectivement le support à une première température T1 pendant un premier intervalle de temps Z1 prédéfini;
c1) maintien de la solution L1 précipitant ou dénaturant de la protéine sur l'échantillon biologique respesctivement le support à une deuxième température T2 pendant un deuxième intervalle de temps Z2 prédéfini, T2 étant inférieure à T1 et Z2 étant supérieur, égal ou inférieur à Z1; ou
c2) dépôt réitéré de la solution L1 précipitant ou dénaturant de la protéine ou dépôt d'une la deuxième solution L2 précipitant ou dénaturant de la protéine sur l'échantillon biologique respesctivement le support à une deuxième température T2 pendant un deuxième intervalle de temps Z2 prédéfini, T2 étant inférieure à T1 et Z2 étant supérieur, égal ou inférieur à Z1; et
d) séchage de l'échantillon.

2. Procédé selon la revendication 1,
**caractérisé en ce**
**qu'**entre les étapes du procédé a) et b), un séchage de l'échantillon est réalisé comme étape du procédé a1) et/ou entre les étapes du procédé b) et c), un séchage de l'échantillon est réalisé comme étape du procédé b1).

3. Procédé selon la revendication 2,
**caractérisé en ce**
**que** l'échantillon est séché à l'air ou à vide.

4. Procédé selon l'une des revendications précédentes,
**caractérisé en ce**
**que** suite aux étapes du procédé b) ou b1), comme étape du procédé b2), l'échantillon fait l'objet d'une congélation.

5. Procédé selon l'une des revendications précédentes,
**caractérisé en ce**
**que** l'échantillon biologique est un échantillon soit cellulaire ou de tissu soit un mélange de protéines ou d'acides nucléiques soit un mélange de macromolécules composé de protéines et/ou de glucides et/ou de lipides et/ou d'acides nucléiques.

6. Procédé selon l'une des revendications précédentes,
**caractérisé en ce**
**que** les solutions L1 et/ou L2 sont des solutions contenant des solvants organiques et/ou des solutions ayant des valeurs pH critiques et/ou des solutions ayant des concentrations ioniques critiques et/ou des solutions salines et/ou des solutions contenant des ions métalliques.

7. Procédé selon la revendication 6,
**caractérisé en ce**
**que** les solvants organiques sont du méthanol et/ou de l'éthanol et/ou de l'alcool butylique et/ou de l'acétone.

8. Procédé selon la revendication 6,
**caractérisé en ce**
**que** les solutions salines sont des sels dissous de l'acide picrique et/ou de l'acide gallotannique et/ou de l'acide tungstique et/ou de l'acide molybdique et/ou de l'acide acétique trichlorique et/ou de l'acide perchlorique et/ou de l'acide sulfosalicylique.

9. Procédé selon l'une des revendications précédentes,
**caractérisé en ce**
**que** T1 comprend une plage de températures comprise entre -10°C et 60°C.

10. Procédé selon l'une des revendications précédentes,
**caractérisé en ce**
**que** les échantillons biologiques sont soumis, au bout de l'étape du procédé d), à un procédé de détermination d'acide nucléique et/ou à un procédé de séparation protéique et/ou à un procédé d'analyse in situ de structures cellulaires.

11. Dispositif de mise en oeuvre d'un procédé de préparation d'échantillons pour analyser des échantillons biologiques selon l'une des revendications précédentes, comprenant au moins une chambre (12, 20) destinée à la réception de l'échantillon biologique respectivement des échantillons biologiques appliqué/s sur au moins un support (24) et au moins un dispositif de réglage de la température (14', 14") destiné au réglage et au pilotage de la température à l'intérieur de la chambre (12, 20),
**caractérisé en ce**
**qu'**à l'intérieur de la chambre (12, 20), au moins une cloison (18) est prévue, la cloison (18) étant apte à être manuellement ou automatiquement enlevée ou déplacée.

12. Dispositif selon la revendication 11,
**caractérisé en ce**
**que** la chambre (12) est apte à être obturée à l'aide d'un couvercle (36).

13. Dispositif selon la revendication 11 ou 12,
**caractérisé en ce**
**que** le dispositif (10) comporte au moins une pompe à vide (16) pour créer un vide à l'intérieur de la chambre (12, 20).

14. Dispositif selon les revendications 11 à 13,
**caractérisé en ce que**
plusieurs chambres (1, 2, 3 ..., n) sont disposées en série et l'une après l'autre.

15. Dispositif selon l'une des revendications 11 à 13,
**caractérisé en ce que**
plusieurs chambres (12, 20) sont superposées.

16. Dispositif selon l'une des revendications 11 à 15,
**caractérisé en ce que**
plusieurs supports (24) sont disposés sur un ou plusieurs chariot/s d'échantillons (26).

17. Dispositif selon l'une des revendications 11 à 16,
**caractérisé en ce que**
les différentes étapes du procédé peuvent être mises en oeuvre et commandées par le dispositif (10) de façon manuelle, semi-automatique ou automatique.
